**Europäisches Patentamt**

(19) **European Patent Office**

**Office européen des brevets**

(11) Veröffentlichungsnummer: **0 148 998**
**B1**

(12) # EUROPÄISCHE PATENTSCHRIFT

(45) Veröffentlichungstag der Patentschrift:
27.04.88

(51) Int. Cl.⁴: **F 16 B 31/00**

(21) Anmeldenummer: **84110609.9**

(22) Anmeldetag: **06.09.84**

(54) **Lösbare Verbindung.**

(30) Priorität: **27.12.83 DE 3347167**

(43) Veröffentlichungstag der Anmeldung:
**24.07.85 Patentblatt 85/30**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**AU-B-528 061**
**DE-A-2 532 330**
**DE-C-875 426**
**DE-U-7 304 365**
**FR-A-1 249 979**
**FR-A-1 534 038**
**US-A-3 130 628**

(73) Patentinhaber: **Borsig GmbH, Berlinerstrasse 27- 37,
D-1000 Berlin 27 (DE)**

(72) Erfinder: **De Haas, Peter, Kaiserstrasse 124, D-1000
Berlin 42 (DE)**
Erfinder: **Linz, Roland, Otto- Dix Strasse 16, D-1000
Berlin 21 (DE)**
Erfinder: **Ilgner, Jürgen, Bernauer Strasse 149 m,
D-1000 Berlin 27 (DE)**

(74) Vertreter: **Müller, Jürgen, Dipl.- Ing., Deutsche
Babcock AG Lizenz- und Patentabteilung
Duisburger Strasse 375, D-4200 Oberhausen 1 (DE)**

**Beschreibung**

Die Erfindung betrifft eine lösbare Verbindung einer Stange mit einem Grundkörper nach dem Oberbegriff der Ansprüche 1 oder 4.

Eine solche Verbindung, die aus der AU-B-528 061 bekannt ist, kann bei großer Dehnlänge spielfrei und mit Hilfe der hydraulischen Spannmutter mit Vorspannung montiert werden. Die bekannte Verbindung ist für Durchsteckschrauben verwendet, auf deren vorstehendes Ende die hydraulische Spannmutter aufgesetzt wird.

Aus der US-A-3 130 628 sind Schraubbolzen zur Verbindung von zwei Teilen eines Rahmens bekannt. Das eine Ende der Bolzen ist in ein Rahmenteil eingeschraubt, während auf das andere, herausragende Ende eine hydraulische Spannvorrichtung gesetzt ist.

Die bekannten Verbindungen mit Spannmuttern für eine Montage unter Vorspannung lassen sich nicht anwenden, wenn das Ende der Bolzen oder Stangen nicht frei zugänglich ist. Das trifft auf Einschraubverschrauben zu z. B. bei Stiftschrauben oder bei der Verbindung einer Kolbenstange mit einem Kreuzkopf in Kolbenverdichtern (Dubbel, Taschenbuch für den Maschinenbau, 14. Auflage, Springer-Verlag Berlin 1981, Seiten 787 bis 789). Bei einer solchen Schraubverbindung erfolgt die Vorspannung über eine Kontermutter. Diese Schraubverbindung hat den Nachteil einer geringen Dehnlange, einer großen Kerbwirkung, einer ungenauen Vorspannung und schlecht aufzubringender Drehmomente, insbesondere wenn diese die manuell aufbringbare Größe übersteigen.

Der Erfindung liegt die Aufgabe zugrunde, die gattungsgemäße Verbindung so zu gestalten, daß sie auf Fälle anwendbar ist, in denen das Stangenende nicht frei zugänglich ist und daß eine Längen- und/oder Winkeleinstellbarkeit zwischen Stange und Grundkörper sichergestellt ist.

Diese Aufgabe wird bei einer gattungsgemäßen Verbindung durch die kennzeichnenden Merkmale der Ansprüche 1 oder 4 gelöst. Vorteilhafte Ausgestaltungen der Erfindung sind in den Unteransprüchen angegeben.

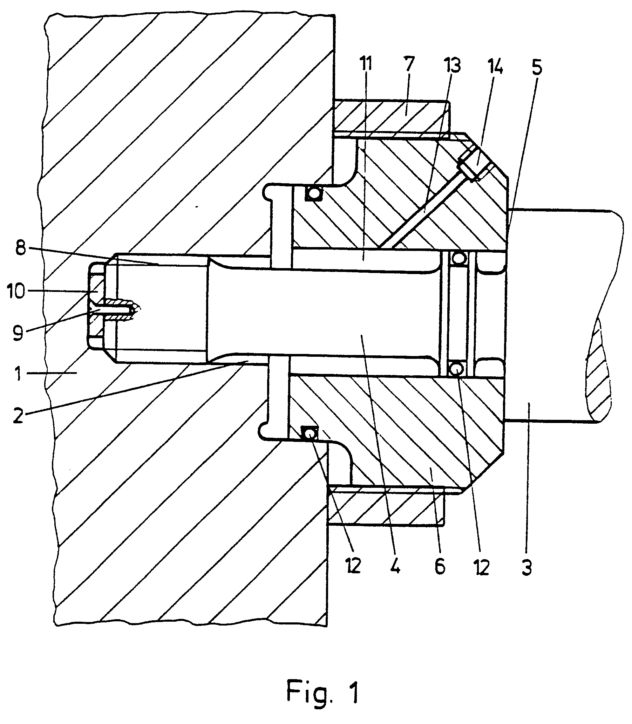

Bei einer Verbindung gemäß den Ansprüchen 1 bis 3 macht die Gewindebuchse, die das nicht frei zugängliche, in den Grundkörper eingreifende Ende der Stange umgibt, den Einbau der Spannvorrichtung möglich. Gleichzeitig läßt die Gewindebuchse ein Verdrehen der Stange gegenüber dem Grundkörper zu, wodurch eine beliebige Winkelstellung bei gleichbleibender Einschubtiefe möglich ist. Aufgrund der Dicke des Stellringes ist die gewollte Einschubtiefe der Stange in den Grundkörper reproduzierbar. Die Verbindung nach Anspruch 4 enthält eine integrierte Hydraulikeinheit, wobei die Paßscheibe die Einschubtiefe festlegt. Mehrere Ausführungsbeispiele der Erfindung sind in der Zeichnung dargestellt und werden im folgenden näher erläutert. Die Fig. 1 bis 3 zeigen jeweils den Längsschnitt durch eine Verbindung gemäß der Erfindung.

Ein Grundkörper 1 weist eine Bohrung 2 zur Aufnahme einer Stange 3 auf. Das Ende 4 der Stange 3 ist im Durchmesser abgesetzt, wobei am Übergang des abgesetzten Endes 4 in den vollen Querschnitt der Stange 3 ein Stangenabsatz 5 gebildet ist. Das abgesetzte Ende 4 der Stange 3 ist als Dehnschaft ausgebildet. An dem Stangenabsatz 5 ist ein Druckkörper 6 abgestützt. Der Druckkörper 6 ist mit einem Außengewinde versehen, auf das eine Überwurfmutter 7 aufgeschraubt. Die Überwurfmutter 7 stützt sich an dem Grundkörper 1 ab.

Nach Fig. 1 ist die Bohrung 2 in dem Grundkörper 1 nicht durchgehend und mit einem Sacklochgewinde 8 versehen, in das das Ende 4 der Stange 3 eingeschraubt ist. Damit die Stange 3 nach jeder Demontage wieder die gleiche Stellung erreicht, ist an der Stirnfläche des Endes 4 mit Hilfe einer Schraube 9 eine Paßscheibe 10 von vorgegebener Dicke angeschraubt. Im fertig montierten Zustand liegt die Paßscheibe 10 an dem Grund der Bohrung 2 an.

Zwischen dem abgesetzten Ende 4, dem Grundkörper 1 und dem Druckkörper 6 ist ein ringförmiger Druckraum 11 gebildet. Der Druckraum 11 ist an seinen beiden Enden durch ringförmige Dichtungen 12 in Form von O-Ringen begrenzt. In den Druckraum 11 mündet eine Bohrung 13 hinein, die durch den Druckkörper 6 hindurchgeführt ist und die an ihrem außen liegenden Ende mit einem Gewindeanschluß 14 versehen ist. An den Gewindeanschluß 14 kann eine Leitung zu einer Druckmittelquelle, zum Beispiel in Form einer bekannten Hydraulikpumpe angeschlossen werden.

Zum Vorspannen der Verbindung wird Druckmittel durch die Bohrung 13 in den Druckraum 11 eingeführt. Der Druck wird so weit gesteigert, bis die errechnete Längung des als Dehnschaft dienenden abgesetzten Endes 4 der Stange 3 erreicht ist. Danach wird die Überwurfmutter 7 um den Betrag der Längung nachgestellt, bis die Überwurfmutter 7 an dem Grundkörper 1 anliegt. Nach dem Ablassen des Druckmittels ist die Verbindung hergestellt. Zur Demontage der Verbindung wird in umgekehrter Reihenfolge vorgegangen.

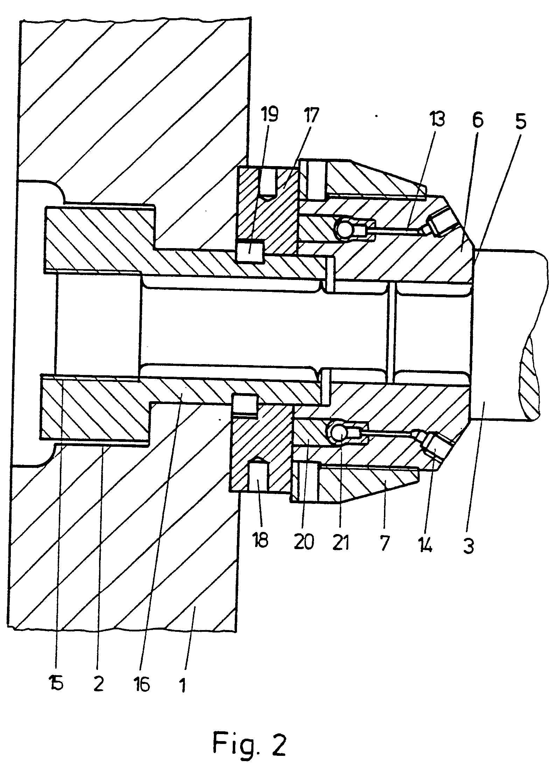

Nach Fig. 2 ist die Bohrung 2 in dem Grundkörper 1 als abgesetzte Durchgangsbohrung ausgebildet. Von der Rückseite des Grundkörpers 1 ist eine mit einem Innengewinde 15 versehene Bundbuchse 16, die eine Einstellmutter darstellt, eingeschoben. Von der Vorderseite des Grundkörpers 1 ist auf das aus dem Grundkörper 1 herausragende Ende der Bundbuchse 16 ein Stellring 17 von vorgegebener Dicke aufgeschoben. Der Stellring 17 ist am Umfang mit Bohrungen 18 versehen und über eine Paßfeder 19 mit der Bundbuchse 16 verbunden. Aufgrund der Dicke des Stellringes 17 ist die gewollte Einschubtiefe der Stange 3 in den Grundkörper 1 reproduzierbar. Die Stange 3 kann zusammen mit der Bundbuchse 16 gegenüber dem Grundkörper 1 verdreht werden, wodurch eine beliebige Winkelstellung bei gleichbleibender Einschubtiefe möglich ist.

Als Druckkörper 6 ist eine hydraulische Ringkolben-Spannmutter verwendet. Die Spannmutter enthält einen axial verstellbaren Ringkolben 20 und einen Schlauch 21, der über die Bohrung 13 und den Gewindeanschluß 14 mit einer Hydraulikpumpe zu verbinden ist. Bei einer Druckbeaufschlagung des Schlauches 21 wird der Ringkolben 20 relativ zum Druckkörper 6 verschoben.

Durch ein Drehen der Bundbuchse 16 mit Hilfe des Stellringes 17 wird die Stange 3 in die Bundbuchse 16 hineingezogen, bis der Druckkörper 6, der vorher auf das Ende 4 der Stange 3 aufgeschoben wurde, an dem Stangenabsatz 5 und dem Stellring 17 anliegt. Durch Aufbringen eines hydraulischen Druckes an dem Druckkörper 6 wird das abgesetzte Ende 4 der Stange 3 auf das errechnete Maß gelängt. Die Überwurfmutter 7 wird um den Dehnbetrag nachgestellt, bis sie am Verstellring 17 anliegt und sich damit indirekt auf dem Grundkörper 1 abstützt. Damit ist die Verbindung vorgespannt und der Druck kann abgelassen werden.

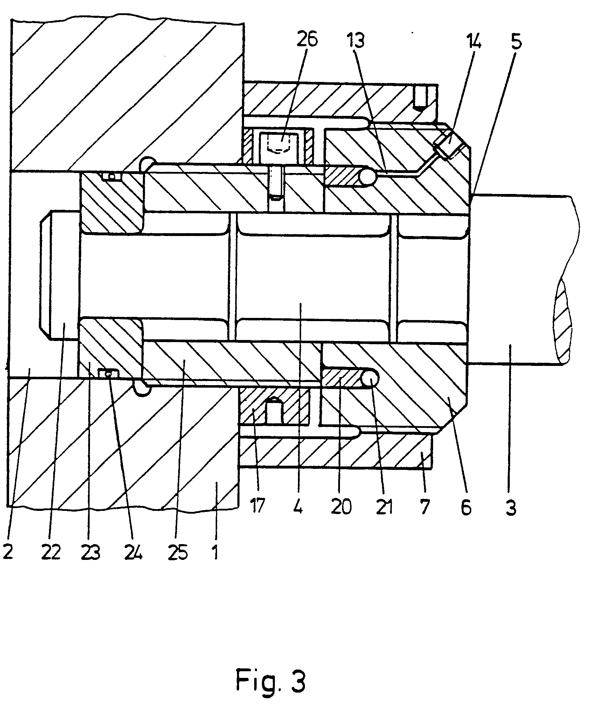

Nach Fig. 3 ist das Ende 4 der Stange 3 mit einem Bund 22 versehen. An den Bund 22 legt sich ein zweigeteilter Ring 23 an, dessen Außendurchmesser geringer ist als der Innendurchmesser der Bohrung 2 des Grundkörpers 1. Der zweigeteilte Ring 23 ist gegen ein Auseinanderfallen durch eine Bandage 24 in Form einer Schlauchfeder zusammengehalten. Das abgesetzte Ende 4 der Stange 3 ist zwischen dem zweigeteilten Ring 23 und dem Spangenabsatz 5 von einer Gewindebuchse 25 und dem Druckkörper 6 umschlossen. Der Innendurchmesser der Gewindebuchse 25 und des Druckkörpers 6 ist größer als der Außendurchmesser des Bundes 22, so daß diese Teile auf das Ende 4 der Stange 3 aufgeschoben werden können. Die Gewindebuchse 25 ist mit einem Außengewinde versehen, das in ein entsprechendes Innengewinde in der Bohrung 2 des Grundkörpers 1 eingreift. Die Gewindebuchse 25 ist auf dem außerhalb des Grundkörpers 1 liegenden Teil von dem Stellring 17 umgeben und mit diesem durch eine Mitnehmerschraube 26 verbunden.

Zur Montage wird die Stange 3 durch Drehen der Gewindebuchse 25 mit Hilfe des Stellringes 17 in den Grundkörper 1 hineingezogen. Die Einschraubtiefe der Stange 3 ist durch den Stellring 17 festgelegt. Der Spannvorgang erfolgt wiederum durch Druckbeaufschlagung des Druckkörpers 6 und anschließendes Nachdrehen der Überwurfmutter 7 um den Dehnbetrag.

**Patentansprüche**

1. Lösbare Verbindung einer Stange (3) mit einem Grundkörper (1), bei der das in den Grundkörper (1) eingreifende Ende (4) der Stange (3) im Durchmesser abgesetzt und als Dehnschaft ausgebildet ist, das abgesetzte Ende (4) der Stange (3) außerhalb des Grundkörpers (1) von einem als hydraulische Ringkolben-Spannmutter ausgebildeten Druckkörper (6) umgeben ist, der Druckkörper (6) an dem Stangenabsatz (5) abgestützt ist und eine Überwurfmutter (7) auf den Druckkörper (6) aufgeschraubt und an dem Grundkörper (1) abgestützt ist, dadurch gekennzeichnet, daß die Stange (3) mit dem einen Ende (4) dadurch in dem Grundkörper (1) gehalten ist, daß dieses Ende von einer Gewindebuchse (16, 25) umgeben ist, über die die Stange (3) und der Grundkörper (1) unter Einhaltung eines radialen Spiels verbunden sind, daß die Gewindebuchse (16, 25) auf dem außerhalb des Grundkörpers (1) liegenden Teil von einem Stellring (17) vorgegebener Dicke umgeben und mit diesem verbunden ist und daß der Stellring (17) an dem Grundkörper (1) anliegt.

2. Verbindung nach Anspruch 1, dadurch gekennzeichnet, daß die Gewindebuchse (16) von der Rückseite in den Grundkörper (1) eingeschoben und mit einem Bund und einem Innengewinde (15) versehen ist, in das das Ende (4) der Stange (3) eingeschraubt ist.

3. Verbindung nach Anspruch 1, dadurch gekennzeichnet, daß die Gewindebuchse (25) in den Grundkörper (1) eingeschraubt ist, daß das abgesetzte Ende (4) der Stange (3) mit einem Bund (22) versehen und zwischen dem Bund (22) und dem Stangenabsatz (5) von einem zweigeteilten, durch eine Bandage (24) zusammengehaltenen Ring (23), von der Gewindebuchse (25) und von dem Druckkörper (6) umgeben ist, wobei der Außendurchmesser des Bundes (22) geringer ist als der Innendurchmesser der Gewindebuchse (25) und des Druckkörpers (6) und daß die Überwurfmutter (7) den Stellring (17) übergreift.

4. Lösbare Verbindung einer Stange (3) mit einem Grundkörper (1), bei der das in den Grundkörper (1) eingreifende Ende (4) der Stange (3) im Durchmesser abgesetzt und als Dehnschaft ausgebildet ist, das abgesetzte Ende (4) der Stange (3) außerhalb des Grundkörpers (1) von einem Druckkörper (6) umgeben ist, der Druckkörper (6) auf dem Grundkörper (1) abgestützt ist, zwischen dem abgesetzten Ende (4) der Stange (3), dem Druckkörper (6) und dem Grundkörper (1) ein durch zwei ringförmige Dichtungen (12) begrenzter Druckraum (11) gebildet ist, in den eine durch den Druckkörper (6) geführte und mit einem Anschluß an eine Druckmittelquelle versehene Bohrung (13) mündet und eine Überwurfmutter (7) auf den Druckkörper (6) aufgeschraubt und an dem Grundkörper (1) abgestützt ist, dadurch gekennzeichnet, daß das Ende (4) der Stange (3) in eine Bohrung (2) des Grundkörpers (1) eingeschraubt ist, daß zwischen der Stirnfläche der Stange (3) und dem Grund der Bohrung (2) eine Paßscheibe (10) von vorgegebener Dicke eingesetzt ist, daß der Druckraum (11) von dem abgesetzten Ende (4) der Stange (3), dem Druckkörper (6) und dem Grundkörper (1) begrenzt ist und daß die mit dem Anschluß an die Druckmittelquelle versehene Bohrung (13) durch den Druckkörper (6) geführt ist.

## Claims

1. Detachable connection of a rod (3) with a base body (1), in which connection that end (4) of the rod (3), which engages into the base body (1), is stepped in diameter and constructed as tensile necked shank, the stepped end (4) of the rod (3) is surrounded outside the base body (1) by a pressure body (6) constructed as hydraulic rotary piston tightening nut, the pressure body (6) is supported at the rod step (5) and a box nut (7) is threaded on to the pressure body (6) and supported at the base body (1), characterised thereby, that the rod (3) is held by the one end (4) in the base body (1) thereby, that this end is surrounded by a threaded bush (16, 25), by way of which the rod (3) and the base body (1) are connected subject to maintenance of a radial play, that the threaded bush (16, 25) is surrounded on the part lying outside the base body (1) by an adjusting ring (11) of predetermined thickness and connected with this and that the adjusting ring (11) lies against the base body (1).

2. Connection according to claim 1, characterised thereby, that the threaded bush (16) is pushed into the base body (1) from the rear side and provided with a collar and with an internal thread (15), into which the end (4) of the rod (3) is threaded.

3. Connection according to claim 1, characterised thereby, that the threaded bush (16) is threaded into the base body (1), that the stepped end (4) of the rod (3) is provided with a collar (22) and surrounded between the collar (22) and the rod step (5) by a two- part ring (23) held together by a band (24), the threaded bush (25) and by the pressure body (6), wherein the outside diameter of the collar (22) is smaller than the inside diameter of the threaded bush (25) and of the pressure body (6), and that the box nut (7) engages over the adjusting ring (17).

4. Detachable connection of a rod (3) with a base body (1), in which connection that end (4) of the rod (3), which engages into the base body (1), is stepped in diameter and constructed as tensile necked shank, the stepped end (4) of the rod (3) is surrounded outside the base body (1) by a pressure body (6), the pressure body (6) is supported on the base body (1), a pressure space (11), which is bounded by two annular seals (12) and into which opens a bore (13), which is led through the pressure body (6) and provided with a connection to a source of pressure medium, is formed between the stepped end (4) of the rod (3), the pressure body (6) and the base body (1), and a box nut (7) is threaded on to the pressure body (6) and supported at the base body (1), characterised thereby, that the end (4) of the rod (3) is threaded into a bore (2) of the base body (1), a shim (10) of given thickness is inserted between the end face of the rod (3) and the base of the bore (2), that the pressure space (11) is bounded by the stepped end (4) of the rod (3), the pressure body (6) and the base body (1) and that the bore (13) provided with the connection to the source of pressure medium is led through the pressure body (6).

## Revendications

1. Assemblage desserrable d'une barre (3) et d'un élément de construction principal (1), l'extrémité (4) de la barre (3) qui s'engage dans l'élément de construction principal (1) présentant une réduction de diamètre et la forme d'une tige de dilatation, l'extrémité (4) de la barre (3) à diamètre réduit étant entourée, à l'extérieur de l'élément de construction principal (1), d'un organe de serrage (6) conformé en écrou de serrage hydraulique a piston annulaire, l'organe de pression (6) prenant appui contre l'épaulement (5) de la barre, un écrou-raccord (7) étant vissé sur l'organe de serrage (6) et prenant appui sur l'élément de construction principal (1), caractérisé en ce que la barre (3) est maintenue par l'une de ses extrémités (4) dans l'élément de construction principal (1) du fait que cette extrémité est entourée d'une douille filetée (16, 25) assurant avec un certain jeu radial la liaison entre la barre (3) et l'élément principal de construction (1), en ce la douille filetée (16, 25) est entourée, sur la partie située a l'extérieur de l'élément de construction principal (1) d'une bague de réglage (17) d'une épaisseur prédéterminée, bague de réglage à laquelle elle se raccorde, et la bague de réglage (17) vient au contact de l'élément principal de construction (1).

2. Assemblage selon la revendication 1, caractérisé en ce que la douille filetée (16) est glissée dans l'élément de construction principal (1) par la face arrière de celui-ci et présente un collet et un filetage intérieur (15) dans lequel est vissée l'extrémité (4) de la barre (3).

3. Assemblage selon la revendication 1 , caractérisé en ce que la douille filetée (25) est vissée dans l'élément de construction principal (1), que l'extrémité (4) à diamètre réduit de la tige (3) présente un collet (22) et se trouve entourée, entre le collet (22) et l'épaulement (5) de la barre, d'une bague (23) constituée de deux parties maintenues par un bandage, de la douille filetée (25) et de l'organe de serrage (6), et par le fait que l'écrou-raccord (7) recouvre la bague de réglage (17).

4. Assemblage desserrable d'une barre (3) et d'un élément de construction principal (1), l'extrémité (4) de la barre (3) s'engageant dans l'élément de construction principal (1) présentant une réduction de diamètre et la forme d'une tige de dilatation, l'extrémité (4) de la barre (3) à diamètre réduit étant entourée, à l'extérieur de l'élément de construction principal (1), d'un organe de serrage (6), cet organe de serrage (6) prenant appui sur l'élément de construction principal (1), une chambre de pression (11) limitée par deux joints annulaires (12) étant constituée entre l'extrémité (4) à diamètre réduit de la barre (3), l'organe de serrage (6) et l'élément de construction principal (1), chambre de pression dans laquelle débouche un perçage (13) pratiqué dans l'organe de serrage (6) et en communication avec une source de fluide sous pression, un écrou-raccord (7) étant vissé sur l'organe de serrage (6) et prenant appui contre l'élément de construction principal (1), caractérisé en ce que l'extrémité (4) de la barre (3) est vissée dans un perçage (2) de l'élément de construction principal (1), en ce entre la face frontale de la barre (3) et le fond du perçage (2), est mise en place une rondelle d'ajustage (10) d'une épaisseur prédéterminée, par le fait que la chambre de pression (11) se trouve limitée par l'extrémité (4) à diamètre réduit de la barre (3), l'organe de serrage (6) et l'élément de construction principal (1), et en ce le perçage (13) en communication avec la source de fluide sous pression est pratiqué dans l'organe de serrage (6).

Fig. 1

Fig. 2

Fig. 3